(19) **Europäisches Patentamt**
**European Patent Office**
**Office européen des brevets**

(11) **EP 4 471 383 A1**

(12) **EUROPEAN PATENT APPLICATION**
published in accordance with Art. 153(4) EPC

(43) Date of publication:
**04.12.2024 Bulletin 2024/49**

(51) International Patent Classification (IPC):
***G01D 5/353*** (2006.01)

(21) Application number: **22923784.7**

(52) Cooperative Patent Classification (CPC):
**G01D 5/35361; G01D 5/353**

(22) Date of filing: **26.01.2022**

(86) International application number:
**PCT/JP2022/002854**

(87) International publication number:
**WO 2023/144916 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Neubrex Co., Ltd.**
**Kobe-shi, Hyogo 650-0023 (JP)**

(72) Inventor: **KISHIDA, Kinzo**
**Kobe-shi, Hyogo 650-0023 (JP)**

(74) Representative: **Meissner Bolte Partnerschaft mbB**
**Patentanwälte Rechtsanwälte**
**Postfach 86 06 24**
**81633 München (DE)**

(54) **POWER CABLE MONITORING SYSTEM, AND METHOD FOR MANUFACTURING SENSOR ROPE**

(57)     This power cable monitoring system includes: a power cable (100) including a power transmission cable (1) provided at an inner circumferential part, an armoring wire (2) provided at an outer circumferential part, and sensor ropes (3, 4) having an optical fiber (7) to detect a physical quantity of a measurement target; and a backscattering light measurement device (110) which measures distribution of the physical quantity of the measurement target, using backscattering light from the optical fiber (7), wherein distribution of temperature and strain of the power cable (100) is obtained from a frequency shift signal of Rayleigh backscattering light obtained by the backscattering light measurement device (110) on the basis of a signal detected by the sensor ropes (3, 4), and a polarization distribution signal obtained from the Rayleigh backscattering light.

FIG. 1

**Description**

TECHNICAL FIELD

The present invention relates to a power cable monitoring system and a sensor rope manufacturing method.

BACKGROUND ART

Regarding wind power generation, while there is new need such as installation on the ocean, there are increasing cases where the locations thereof are near fishery areas or sea lanes or cross sea lanes, and a total of 90 disconnection accidents have occurred abroad during seven years from 2009 to 2016 (see, for example, Non-Patent Document 4).

Under the present laws, responsibility for these accidents is on a cable owner and an enormous amount of insurance has arisen. Accordingly, some technical specifications that have conventionally been optional are recently becoming essentially required technical specifications.

Meanwhile, installation of cables to isolated islands is increasingly performed, and in light of the specifications, such a cable needs to be installed at a deep water place. In this case, the cable in use requires high voltage or power, and for achieving this, a huge cable is needed.

Specifically, a cable in use is normally assumed to have a weight of 32 kg/m, but weight specifications required in the huge cable are 42 kg/m as specifications for 22 kV and 52 kg/m as specifications for 66 kV, for example. Further, cables having specifications ranging up to 130 kV and 250 kV need to be developed, and thus it is expected that larger cables than ever before will be put into practical use in the future.

Measuring cable deformation by combining an optical cable with an armoring wire of a power cable is difficult particularly for the aforementioned large cable. The reason is that a cable having a diameter greater than 100 mm generally has a slip-type configuration.

The slip type has a feature that "slip" occurs between a conductive core and an armoring wire at an outer part (outer circumferential part) or between armoring wires. Because of the "slip", when the cable is bent, strain in the armoring wire is reduced significantly (approximately 1/10), whereby the strain can be kept within the allowable range of a normal steel material during manufacturing or installation work, i.e., the feature of a so-called "strand" is exerted.

In addition, in a case of power cables at the ground, examples of factors for failure thereof include increase in human activities, difficulty in access, and power interruption tolerance, along with urbanization, and requirements regarding cable management and failure addressing cost and speed are becoming higher.

For a large cable as described above, it is difficult to realize a structure that can simply maintain the strength thereof, and designing or verification, and monitoring application in long-term use, are urgent needs.

At present, there are not many cases where large cables as described above are installed, but worldwide, several domestic and foreign major companies are in a principal competitive relationship, and a new method for manufacturing such a large cable is being demanded.

In a case where a cable is installed at a dynamic deep water platform or is connected from the ocean to a power grid on the ground, a floating cable which floats at the ocean surface is needed, and thus it is necessary to recognize a load applied to the cable due to a water wave, wind, a ship, or fishery operation, in real time. In this case, it is known that a speed of 0.1 second is required for keeping up with a wave load.

Further, a manager of a power grid needs to predict a cable failure associated with the above application in advance, to grasp a damage state upon occurrence of an accident, consider a method for coping with the damage, and confirm an effect after the coping, for example.

Meanwhile, recently, optical fiber distribution measurement technology is gradually improving. Although this technology has been conventionally implemented by a sensor alone, various studies are recently going on so as to achieve integration in the cable.

Therefore, at present, it is important to develop such a cable that can achieve the following.

a) To monitor electricity operation using heat generation and achieve so-called real time thermal rating (RTTR) .

b) To specify occurrence of abnormal current before short-circuit occurs and the location of the occurrence, specify the location of short-circuit upon occurrence of short-circuit, and evaluate structure damage of a cable.

c) To evaluate static and dynamic loads acting on a cable due to a wave or an ocean flow.

d) To sense and evaluate a cable shape.

Conventionally, as high-voltage cables (high voltage dynamic export cables), a mono-core structure and a triple-core structure have been proposed, and along with these, an optical fiber has also been proposed as a communication line (see, for example, Patent Documents 1 to 3).

Meanwhile, in distributed fiber optic sensing (DFOS) technology for an optical fiber, various technologies such as separation of temperature and strain, single-ended measurement, sound wave measurement, and shape sensing, as well as temperature measurement for a measurement target, have been put into practice, using Brillouin scattering, Rayleigh scattering, and conventional Raman scattering.

In addition, in a case of a non-slip type, multiple optical fibers are mounted to the same dedicated cable, and structure information of the cable is acquired, whereby three-dimensional displacement information about the cable can be measured.

Further, an armored cable is developed and a cable manufacturing technology in which displacement is synchronized with a metal wire of steel or the like is established, whereby technologies that enable large-amount manufacturing while achieving both of optical fiber protection and armored rope deformation measurement are being established (see, for example, Non-Patent Documents 1 to 5).

LIST OF CITATIONS

PATENT DOCUMENTS

Patent Document 1: Japanese Laid-Open Utility Model Publication No. 56-117427
Patent Document 2: Japanese Laid-Open Patent Publication JP 11-66 978 A
Patent Document 3: Japanese Laid-Open Patent Publication JP 2019-179 593 A

*NON-PATENT DOCUMENT*

Non-Patent Document 1: K. Kishida et al., "Study of Optical Fibers Strain-Temperature Sensitivities Using Hybrid Brillouin-Rayleigh System", Photonic Sensors, 2013, DOI: 10.1007/s13320-013-0136-1.
Non-Patent Document 2: K. Kishida et al., "Development of Real-Time Gated Digital (TGD) OFDR Method and Its Performance Verification", Sensors 2021, 21, 4865. https://doi.org/10.3390/s21144865
Non-Patent Document 3: Moriyasu, et al., "Bending and Torsional Deformation Analysis of a Twisted Wire", Journal of the Robotics Society of Japan, Vol. 30, No. 8, 2012, pp. 813-821
Non-Patent Document 4: B. Matvichuk et al., "Full length Distributed temperature monitoring of export cables and interconnectors beyond 150 km", Omnisens SA, 2018.
Non-Patent Document 5: Nishimoto et al., "New Type of 66kV XLPE Submarine Cable with Mechanical-Damage-Detectable-Sensor by Optical Fiber", IEEJ Transactions on Power and Energy, Vol. 112, No. 10, 1992, pp. 921-926

SUMMARY OF THE INVENTION

PROBLEM TO BE SOLVED BY THE INVENTION

However, in a Brillouin optical time domain reflectometer (BOTDR) using Brillouin scattering described above, there is a case where short-circuit cannot be detected because of insufficient sensitivity, depending on a measurement temperature. In addition, since spatial resolution is insufficient, for example, in a case where helical strands are used, there is a case where bending displacement of a measurement target cannot be detected unless reducing to not greater than 1/4 of the pitch (about 1.5 m) of the helix. Also, in a case of early displacement of a measurement target, sensitivity for detecting the displacement is low and thus the displacement cannot be detected, as has been pointed out (see, for example, Non-Patent Document 4).

Slip-type cable bending sensing has not been realized yet. For example, in a bending detection method based on loss detection by an optical time domain reflectometer (OTDR), sensitivity is low, and therefore the cable diameter is gradually reduced from a great value, so that loss can be detected only when reaching a case of bending using a 15 mm cable. However, the cable itself has already been broken in actuality. On the other hand, if the cable is designed so that cable bending readily occurs by reducing the cable diameter, safety is lost (see, for example, Non-Patent Document 5).

Problems related to practical use described above are roughly sorted into the following three problems.

The first problem is requirement for an optical fiber mounting method. The FIMT fiber can perform temperature measurement if well manufactured, but cannot measure strain in principle because of its free structure. That is, there is a conventional example in which an optical fiber is mounted to a high-voltage adapted structure cable having a large weight, but the optical fiber in this case is mounted to a loose tube and therefore deformation of the optical fiber and deformation of the cable which is a measurement target do not coincide with each other. Thus, such an optical fiber having a normal structure cannot detect strain of a measurement target and cannot perform detection as a structural body.

In addition, a method for manufacturing a high-voltage adapted structure cable having a large weight is not suitable to the existing equipment, and a manufacturing method and a cable structure that are suitable to the existing manufacturing equipment are desired.

The second problem is requirement of having a function of monitoring a measurement target. In this regard, there are challenges shown below. The first challenge is to enable distributed measurement of temperature and strain (about 20 cm) not greater than a strand pitch of an armoring wire, with respect to a measurement target. The second challenge is to enable measurement of bending. The third challenge is to enable measurement of a sound wave with respect to a measurement target. The fourth challenge is to enable measurement of a temperature abnormality location with respect to a measurement target. The fifth challenge is to enable sensing of immersion of a measurement target.

In other words, such a technology that can detect and monitor a dynamically varying load such as ocean waves in real time has not been realized. In addition, there has been no monitoring and measurement system that satisfies a usage lifespan of several tens of years.

The third problem is a problem regarding selection for what to use as a measurement technology. First, regarding measurement by a Brillouin method, another company has a corresponding technology which has achieved a one-side measurement range of 100 km but has a problem that measurement accuracy is insufficient. On the other hand, regarding measurement by a Rayleigh method and a DAS method, measurement over an ultra-long distance longer than 100 km which is required for a submarine cable has not sufficiently been achieved at present.

In practical use, a technology applicable to a 10 km class and an optimum technology that can satisfy each of required specifications over a distance of 50 km or longer, are demanded.

The present invention has been made to solve the above problems, and an object of the present invention is to accurately measure a sound wave, bending, and distribution of strain and temperature occurring in a power cable, including a floating cable installed on the ocean and a submarine cable installed at a seabed. Another object of the present invention is to detect the locations of temperature abnormality and immersion that have occurred on a power cable.

## MEANS TO SOLVE THE PROBLEM

A power cable monitoring system according to the present invention includes: a power cable including a power transmission cable provided at an inner circumferential part, an armoring wire provided at an outer circumferential part, and an armored optical module at the same diameter as the armoring wire, the armored optical module having an optical fiber to detect a physical quantity of a measurement target; and a backscattering light measurement device which measures distribution of the physical quantity of the measurement target, using backscattering light from the optical fiber, wherein distribution of temperature and strain of the power cable is obtained from a frequency shift signal of Rayleigh backscattering light obtained by the backscattering light measurement device on the basis of a signal detected by the armored optical module, and a polarization distribution signal obtained from the Rayleigh backscattering light.

## EFFECT OF THE INVENTION

With the power cable monitoring system according to the present invention, it becomes possible to accurately measure a sound wave, bending, and distribution of strain and temperature occurring in a power cable, including a floating cable installed on the ocean and a submarine cable installed at a seabed. In addition, it becomes possible to detect the locations of temperature abnormality and immersion that have occurred on a power cable.

## BRIEF DESCRIPTION OF THE DRAWINGS

FIG. 1 illustrates the configuration of a power cable monitoring system of Embodiment 1.

FIG. 2 is a table illustrating the outline of measurement methods used in the power cable monitoring system of Embodiment 1.

FIG. 3 is a block diagram illustrating the relationship between measurement methods used in the power cable monitoring system of Embodiment 1 and measurement FO modules formed by intelligent power cables.

FIG. 4 illustrates the outline of measurement FO modules of the intelligent power cables of Embodiment 1.

FIG. 5 is a schematic sectional view showing an example of the intelligent power cable of Embodiment 1.

FIG. 6 illustrates examples of sensor ropes for the intelligent power cable of Embodiment 1.

FIG. 7 illustrates a manufacturing method for a sensor rope of the intelligent power cable of Embodiment 1.

FIG. 8 illustrates the structure of a constant-interval coated FIMT for the intelligent power cable of Embodiment 1.

FIG. 9 illustrates other examples of sensor ropes for the intelligent power cable of Embodiment 1.

FIG. 10 illustrates examples of a case where a sensor rope is configured as a power monitoring module.

FIG. 11 illustrates other examples of a case where a sensor rope is configured as a power monitoring module.

FIG. 12 is a schematic sectional view showing an example of an intelligent power cable of Embodiment 2.

FIG. 13 illustrates temperature change during current application, measured by the intelligent power cable of Embodiment 1 or 2.

FIG. 14 illustrates temperature change in a case of determining whether or not insulation layer breakdown of the power cable has occurred, in the intelligent power cable of Embodiment 1 or 2.

FIG. 15 illustrates a three-dimensional model for evaluating deformation of a sensor rope used in the intelligent power cable of Embodiment 1 or 2.

FIG. 16 illustrates physical quantities to be evaluated and parameters used in the three-dimensional model shown in FIG. 15.

FIG. 17 illustrates an example of actual measurement of cable deformation, performed by the power cable monitoring system of Embodiment 1 or 2.

FIG. 18 shows measurement results when bending measurement was performed using a polarization signal of a Rayleigh scattering signal by the power cable monitoring system of Embodiment 1 or 2.

FIG. 19 illustrates the outline of a case of specifying a sailing location of a ship by the power cable monitoring system of Embodiment 1 or 2.

DESCRIPTION OF EMBODIMENTS

An intelligent power cable and a power cable monitoring system of the present invention will be described below with reference to the drawings. The intelligent power cable of the present invention is configured such that, instead of a power cable using only a fiber in metallic tube (FIMT) in conventional art, a carbon tool steel wire (SK steel wire; hereinafter, may be simply referred to as SK wire) for accurately detecting strain distribution and having a greater strength and a more flexibility than the FIMT is provided at an interposed part between individual steel wires, thereby forming armoring wires with the FIMT and the SK steel wire combined. Here, the armoring wire is normally a constituent element unique to a power cable and is used for the purpose of a tensile strength in cable installation and protection from external damage by an anchor or a fishing gear. Hereinafter, the details will be described with reference to the drawings.

Embodiment 1

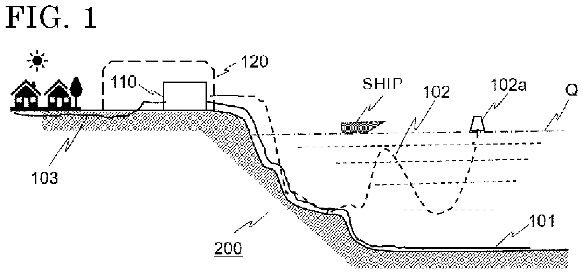

First, a power cable monitoring system using an intelligent power cable in Embodiment 1 will be described with reference to FIG. 1.

FIG. 1 shows an example of a power cable monitoring system 200 according to Embodiment 1.

As shown in FIG. 1, for the purpose of monitoring a submarine cable 101 installed at a seabed, a floating cable 102 leading from the seabed to an ocean surface, and a buried cable 103 buried under the ground of a land (hereinafter, these are collectively referred to as intelligent power cables 100), a monitoring center 120 has a backscattering light measurement device 110 of a hybrid type which can use both of Brillouin scattering and Rayleigh scattering and performs processing on a signal from a measurement fiber sensor provided in each intelligent power cable 100.

Here, the backscattering light measurement device 110 includes a beam splitter for measuring polarization distribution from Rayleigh backscattering light and a processing device for performing processing on a backscattering light signal and the like (see Non-Patent Document 2), as described in detail later. In FIG. 1, "Q" denotes the position of the sea surface (top sea surface).

Here, as shown in FIG. 1, the submarine cable 101 is provided along the seabed over a long distance from the monitoring center 120 to a seabed position for installment. In addition, the floating cable 102 is provided along the sea surface (see "Q" in FIG. 1) from the monitoring center 120 to a position for installment on the ocean, using a float 102a and the like. Further, the buried cable 103 is provided, with most part thereof buried under the ground, from the monitoring center 120 to the position of a construction to be monitored.

In monitoring the intelligent power cable by the above power cable monitoring system, the backscattering light measurement device 110 and the intelligent power cables 100 are connected to each other, whereby the backscattering light measurement device 110 can measure frequency shift of scattering light in association with an installation position of the intelligent power cable.

Then, the power cable monitoring system 200 can be used for detecting, for example, unusual change occurring at the intelligent power cable, on the basis of the above measured value. Thus, the power cable monitoring system 200 includes the intelligent power cables 100 and the backscattering light measurement device 110 as main components.

With the power cable monitoring system 200 provided as described above, it is possible to monitor whether or not abnormality has occurred on the intelligent power cables 100 which are a monitoring target, at all positions where the intelligent power cables are installed, from a position near the monitoring center as a reference, over a long period of several tens of years or longer.

Here, as a measurement technology available for the power cable monitoring system 200, there is a Rayleigh intensity pattern (RIP) technology which is applicable to a case where the measurement distance is not less than 50 km, but this technology is limited within approximately 100 km. In a case of a long distance not less than about 200 km, monitoring is performed in measurable distance ranges from both ends, but if measurement needs to be performed over the entire length of a distance longer than the above, a relay device needs to be used for extending the distance. COTDR which is a basic technology of RIP has a performance record of 9000 km in a case of having a relay device.

Accordingly, next, the outline of an example of the power cable monitoring system 200 of Embodiment 1 will be described below from the perspective of measurement methods.

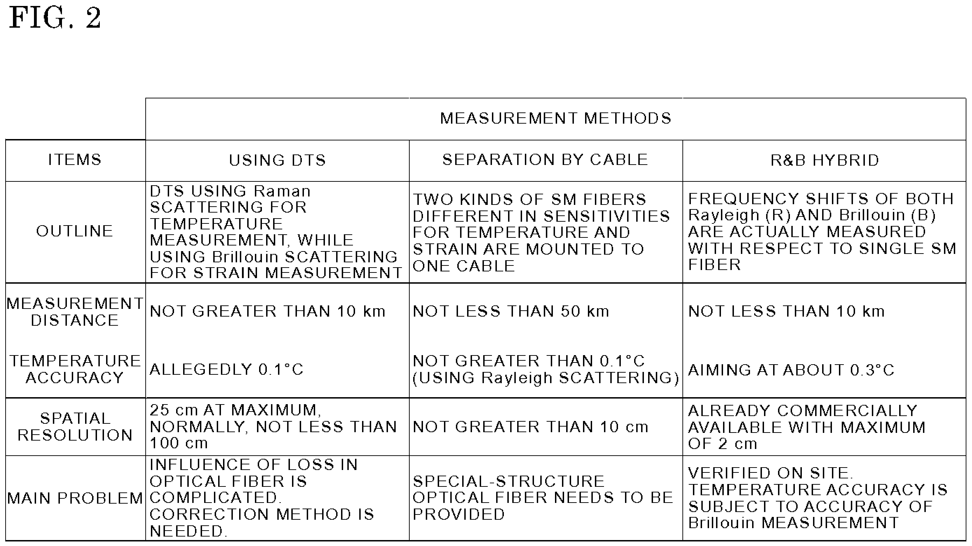

FIG. 2 illustrates the outline of measurement methods in the present invention, and shows a "separation by cable" method in which two kinds of SM fibers are used at the same time, and an "R&B hybrid" method of measuring frequency shifts of both of Rayleigh scattering light and Brillouin scattering light at the same time using the same SM fiber, as compared to a distributed temperature sensing (DTS) method using Raman scattering, which is a conventional method using mainly an MM fiber. That is, in the present invention, the "separation by cable" method shown at the center column in the table and the "R&B hybrid" method shown at the right column are used.

By using the above methods, it is possible to perform measurement with high accuracy (spatial resolution = less than 100 cm) over a long distance (not less than 10 km). On the other hand, in the conventional "DTS" method, due to drift, accuracy of measurement data is inferior to that in the methods in the present invention, and the distance resolution is normally not less than 100 cm and thus is not good as compared to distance resolution of not greater than 10 cm in the present invention. In the "R&B hybrid" method, mainly due to constraints in usage of Brillouin measurement, accuracy of measurement temperature is 0.3 °C, which is slightly inferior to accuracy of not greater than 0.1 °C in the separation by cable method.

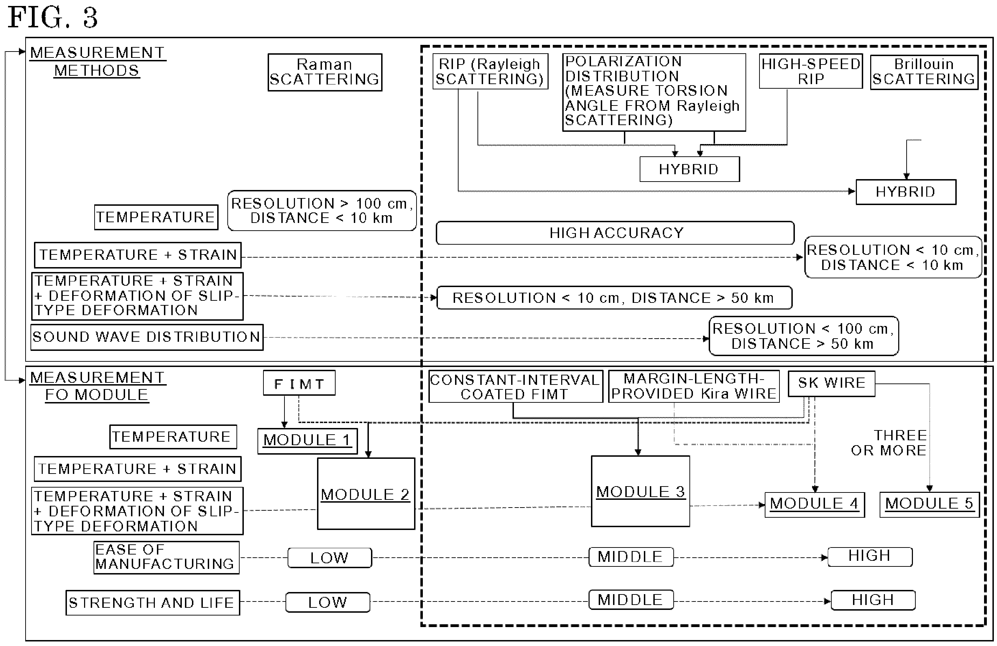

Accordingly, next, with reference to FIG. 3, the details of the measurement methods that enable high-accuracy measurement as described above will be described in association with the configurations of intelligent power cables used in the present invention.

FIG. 3 is a block diagram illustrating the measurement methods used in the power cable monitoring system of Embodiment 1 and measurement fiber optic (FO) modules formed by the intelligent power cables and used for the above measurement methods (the measurement methods are shown at an upper-stage part in a rectangular frame drawn by a dotted line in FIG. 3, and the measurement FO modules are shown at a lower-stage part in the rectangular frame drawn by the dotted line in FIG. 3).

As described above, the part in the rectangular frame drawn by the dotted line in FIG. 3 is a part indicating the feature of the power cable monitoring system of Embodiment 1. In Embodiment 1, the measurement FO modules shown at the lower-stage part in the rectangular frame and the measurement methods shown at the upper-stage part in FIG. 3 are used in combination, whereby high-accuracy measurement with spatial resolution of less than 100 cm can be achieved in a range where the measurement distance is not less than 10 km.

Here, as shown in the measurement methods at the upper-stage part in FIG. 3, by a method using polarization distribution obtained from Rayleigh scattering, i.e., a measurement method in which a torsion angle of a cable or a rope which is a measurement target is measured from a Rayleigh scattering light signal and then the measured data and a RIP obtained from the Rayleigh scattering light signal are used in a hybrid manner, high-accuracy data with resolution (resolution with respect to measurable distance) of not greater than 10 cm can be obtained as compared to the conventional measurement method.

In particular, in measurement for temperature and strain, accuracy in which the spatial resolution is less than 10 cm can be obtained in a distance range of not greater than 10 km, by a method using Rayleigh scattering and Brillouin scattering in a hybrid manner. In addition, in measurement for temperature, strain, and deformation of a slip-type cable, accuracy in which the spatial resolution is less than 10 cm can be obtained in a distance range of greater than 50 km, by a method using polarization distribution and a RIP or a high-speed RIP in a hybrid manner.

Further, in measurement for sound wave distribution, accuracy in which the spatial resolution is less than 100 cm can be obtained in a distance range of greater than 50 km, by a method using a high-speed RIP and polarization distribution in a hybrid manner.

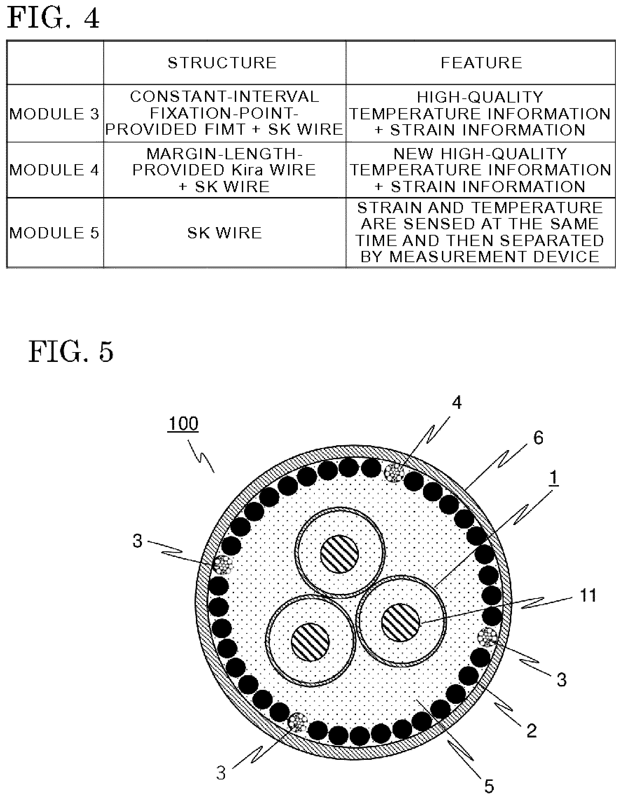

In addition, as shown in the measurement FO modules at the lower-stage part in FIG. 3, first, using an armored optical module (see module 3, module 4, and module 5 in FIG. 3) with which one or several armoring wires (denoted by reference character "2" in FIG. 5 described below) of the power cable are at the same diameter, strain or torsion which is a physical quantity of the armoring wires is measured in a distributed manner, whereby the shape of a conductor of the power cable surrounded by the armoring wires or the shape of the cable can be measured. The following description regarding the power cable monitoring system of Embodiment 1 is all based on the optical module having the above feature.

The armored optical module used in the power cable monitoring system of the present Embodiment 1 has an elastic modulus that is about 80 % of the elastic modulus of the armoring wires at the same diameter, and can be manufactured by normal manufacturing equipment.

In contrast to a module 1 formed by only the FIMT or a module 2 formed by the FIMT and the SK wire in conventional art, the armored optical module at the same diameter as the armoring wires is used in the power cable monitoring system of the present Embodiment 1. Specifically, using the module 3 formed by a constant-interval fixation-point-provided FIMT and the SK wire, temperature and strain of a measurement target, or temperature and strain of a measurement target and deformation of a slip-type cable, are measured.

In addition, using the module 4 formed by a margin-length-provided Kira wire (Romanization of "*Kira*" wire in Japanese) described later and the SK wire, temperature and strain of a measurement target and deformation of a slip-type cable are measured. In this case, as described above in FIG. 2, two different single-mode (SM) optical fibers mounted to the same cable are respectively used as a temperature measurement fiber and a strain measurement fiber.

Further, using the module 5 formed by three or more SK wires, temperature and strain of a measurement target and deformation of a slip-type cable are measured. In this case, both of Rayleigh scattering light and Brillouin scattering light from at least three SM optical fibers are used.

In a case of measuring an RIP and polarization distribution at the same time (measuring them on the basis of Rayleigh scattering light measured at the same time), it is possible to measure deformation of a measurement target even with one SK wire.

For comparison with the modules 3 to 5 (which may be collectively referred to as armored optical modules), the module 1 and the module 2 which are conventional FO modules are shown together in FIG. 3. The module 1 is a module for measuring only temperature, and the module 2 is a module for measuring temperature and strain, or temperature, strain, and deformation of a slip-type cable.

Further, at the lower part in FIG. 3, characteristics regarding ease of manufacturing of a cable and regarding strength and life are shown in association with the modules configured as described above. In the module 1 and the module 2, both characteristics are low. On the other hand, in the module 3, both characteristics are middle (normal), and in the module 4 and the module 5, both characteristics are high, thus providing advantageous effects.

Accordingly, hereinafter, features of elements composing the modules 3 to 5 will be described with reference to the drawings.

FIG. 4 shows the configurations and the features of the three modules 3, 4, and 5 which have optical fibers and are measurement FO modules used in the power cable monitoring system of Embodiment 1.

As shown in FIG. 4, the module 3 is formed of the constant-interval fixation-point-provided FIMT (for temperature measurement; the detailed structure will be described later) and the SK wires (three or more wires; mainly for strain measurement), the former and the latter both having optical fibers for measurement, and can provide strain information and temperature information with a high quality of not greater than 0.1 °C. The module 4 is formed of a margin-length-provided Kira wire (for temperature measurement; the details will be described later) and SK wires (three or more wires; mainly for strain measurement), the former and the latter both having optical fibers for measurement, and can provide strain information and temperature information with a high quality of not greater than 0.1 °C with respect to a measurement target. The module 5 is formed of only three or more SK wires (for temperature measurement and strain measurement) each having an optical fiber for measurement, and senses (detects) signals for obtaining strain and temperature, at the same time. Then, the values of strain and temperature are separately obtained using the above backscattering light measurement device 110. Here, the outer diameter of the armored optical module used as the module 5 may be different from that of the above armoring wires (e.g., a cable having an armored tension member structure coating the outer circumference), or may be the same. The reason for using three or more SK wires as described above will be described in detail later.

Next, the intelligent power cable to which the above measurement FO module is mounted will be described with reference to the drawings.

The intelligent power cable 100 (hereinafter, may be simply referred to as power cable 100) used in the power cable monitoring system 200 of Embodiment 1 will be described with reference to FIG. 5.

FIG. 5 is a schematic sectional view showing an example of the power cable 100 using a three-core power transmission cable 1 which is, as a typical example, a CV cable (abbreviation of cross-linked polyethylene insulated vinyl sheath cable).

As shown in FIG. 5, the power cable 100 includes, as main components: three power transmission cables 1 provided at an inner circumferential part (center part) of the power cable 100 and having conductors 11 at their respective axial parts; a plurality of armoring wires 2 (hereinafter, may be referred to as first strand wires 2) provided at an outer circumferential part of the power cable; a plurality of (three or more) sensor ropes 3 (mainly for strain measurement) corresponding to the SK wires of each module described above; the sensor rope 4 (mainly for temperature measurement) corresponding to the constant-interval fixation-point-provided FIMT or the margin-length-provided Kira wire; the insulation layer 5 filled with resin or the like at gaps between the components described above; and a shield portion 6 at the outermost circumferential part. Here, the armoring wires 2 are made in a strand form with multiple strands gathered up.

The reason why the sensor ropes 3 and the like are provided at the outer circumferential part of the power cable is that cable deformation is more remarkable at the outer circumferential part than at the inner circumferential part and thus prioritizing evaluation at the outer circumferential part is advantageous.

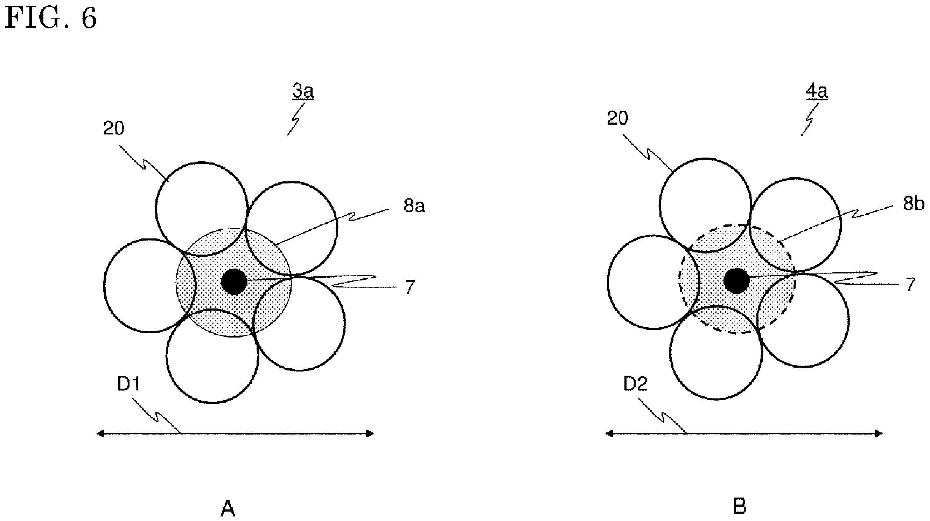

Next, examples of the sensor rope 3 or the sensor rope 4 described above will be described in more detail with reference to FIG. 6A and FIG. 6B.

FIG. 6A is a sectional view (corresponding to a plane perpendicular to the rope axis) showing an example of the structure of a sensor rope 3a which is an example of the sensor rope 3, and FIG. 6B is a sectional view (corresponding to a plane perpendicular to the rope axis) showing the structure of a sensor rope 4a which is an example of the margin-length-provided Kira wire which is an example of the sensor rope 4.

In each sensor rope, an optical fiber 7 is provided at an axis part, and five second strand wires 20 arranged in a helical shape (which looks like an annular shape in the sectional view) around the outer side of the optical fiber 7 are adhered and fixed via resin 8a, 8b provided coaxially with the optical fiber 7.

Here, as described later, the resin 8a is provided as an adhesive over the entire length of the sensor rope 3a, and the resin 8b is not provided as an adhesive over the entire length of the sensor rope 4a but is provided as an adhesive intermittently (with constant intervals therebetween) in the axial direction.

That is, there is a feature that the optical fiber has length margins between the resin-filled parts (i.e., fixed parts). A diameter D1 of a circumcircle of the sensor rope 3a (hereinafter, simply referred to as outer-circumference diameter D1; the same applies to a diameter of a circumcircle of another sensor rope) (see FIG. 6A) and an outer-circumference diameter D2 of the sensor rope 4a (see FIG. 6B) are each about 1.2 to 8 mm.

In each of FIG. 6A and FIG. 6B, as described above, the number of the second strand wires 20 is five and in this case, the cable resistance against a lateral pressure can be made greater than in a case where the number of strands is six. In FIG. 6A and FIG. 6B, the optical fibers 7 for sensing are provided at the center axis positions of the sensor rope 3a and the sensor rope 4a.

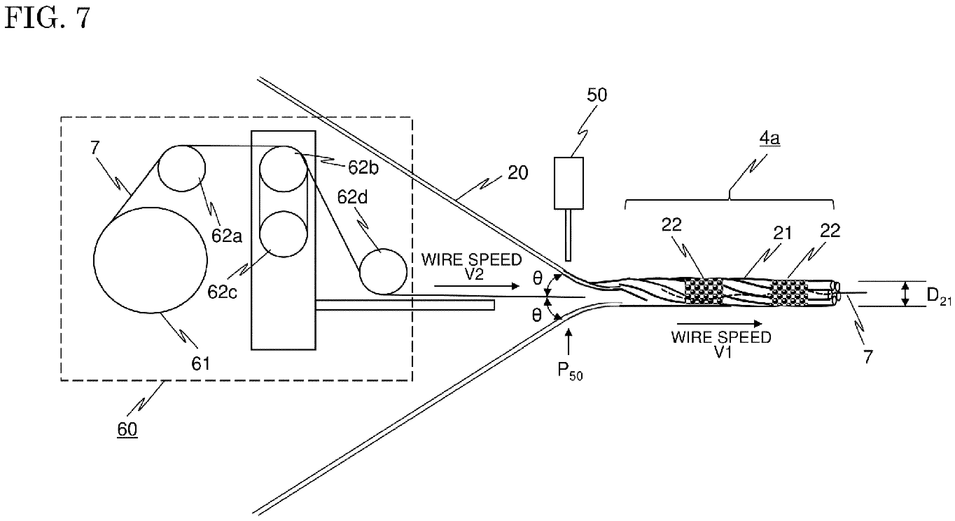

Accordingly, next, a manufacturing method for the sensor rope 4a (an example of the margin-length-provided Kira wire) of the intelligent power cable in Embodiment 1 will be described in detail with reference to FIG. 7.

As shown in FIG. 7, the optical fiber 7 is fed at a constant speed (wire speed V2) rightward in the horizontal direction from an exit (not shown) of an optical fiber feeding device 60. The optical fiber feeding device 60 includes a bobbin 61 around which the optical fiber 7 is wound, and four pulleys 62a, 62b, 62c, 62d for feeding the optical fiber 7 wound around the bobbin 61, at a constant speed (wire speed V2), without slacking.

Here, a length by which the length of the optical fiber becomes greater than the cable length is referred to as a margin length. The margin length is set to be greater than a length of thermal expansion between the steel wire and the optical fiber in a usage temperature range. For example, if the usage temperature range is 100 °C, thermal expansion difference between the steel wire and the optical fiber is 6 $\mu\varepsilon$/°C, and the margin length is set to be not less than 0.06 % (600 $\mu\varepsilon$).

Then, when the bobbin 61 starts to rotate (the rotation direction is clockwise), the optical fiber 7 wound around the bobbin 61 passes on outer circumferential parts of the pulley 62a, the pulley 62b provided so as to rotate as a pair with the pulley 62c, and the pulley 62d, in this order, and thus is fed at the wire speed V2 rightward in the horizontal direction from the exit of the optical fiber feeding device 60.

Along with movement of the optical fiber, a total of five second strand wires 20 (two of the total of five second strand wires 20 are shown in FIG. 7, for simplification) fed at predetermined angles $\theta$ so as to surround the optical fiber 7 change their movement directions to a horizontal direction near a position $P_{50}$ in the horizontal direction, and then are joined while moving at a constant speed (wire speed V1) in the horizontal direction and being twisted helically so as to be integrated with the optical fiber 7 by resin injected discontinuously (intermittently) for a certain period at predetermined time intervals from a resin injection device 50 provided at the position $P_{50}$. Hereinafter, the parts intermittently joined by the resin are referred to as joined parts (may be referred to as fixed parts) 22.

At this time, the optical fiber 7 and the second strand wires 20 to be joined to each other at the position $P_{50}$ are joined while moving rightward at the wire speed V1 smaller than the wire speed V2 from the position $P_{50}$ as a boundary, to form the joined parts 22. In this way, the sensor rope 4a is formed to have a structure in which non-joined parts 21 not joined (not coated) by resin and the joined parts 22 joined by the resin are formed alternately.

Thus, the optical fiber 7 is placed in a nonlinear shape (with some margin length) at the inner part of the sensor rope 4a, as shown by a dotted line in FIG. 7. The outer diameter of the manufactured sensor rope 4a is set to a constant value $D_{21}$ determined by the wire speed V1 and the wire speed V2. That is, the sensor rope 4a is manufactured as a margin-length-provided Kira wire whose outer-circumference diameter is determined to be $D_{21}$ as a result from the magnitude relationship (V1 < V2) between the wire speed V1 and the wire speed V2.

With the above manufacturing method adopted, the optical fiber is fixed, whereby manufacturing of the sensor rope 4a is facilitated and the strength and the life of the entire sensor rope are improved.

In the above description of the manufacturing method for the sensor rope 4a, it has been assumed that the two second strand wires 20 are steel wires. However, instead of steel wires, aluminum wires (Al wires) or copper wires plastically deformed by means of extrusion may be used. In this case, the Al wires or the copper wires have a strength equivalent to that of the steel wires.

In the above description, the case where the sensor rope 4 is the margin-length-provided Kira wire has been described. Next, in a case where the sensor rope 4 is a constant-interval fixation-point-provided FIMT 4b (which may be referred to as sensor rope 4b), the structure thereof will be described with reference to the drawings.

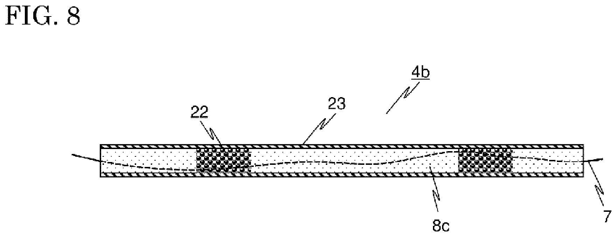

FIG. 8 is an axial-direction sectional view illustrating the structure of a constant-interval fixation-point-provided FIMT 4b. As shown in FIG. 8, in an insulator 8c filling the inside of an FIMT 23 which is a metal tube provided at an outer circumferential part, the optical fiber 7 used for measurement is placed while being joined intermittently at joined parts 22 with constant intervals therebetween in the axial direction by resin or the like.

As in the case of the margin-length-provided Kira wire, the constant-interval fixation-point-provided FIMT 4b configured as described above is superior in ease of manufacturing and the strength or the life, as compared to the module 1 or the module 2 which is a conventional-structure measurement FO module using an FIMT. Thus, it becomes possible to form the module 3 which is a measurement module having higher performance as compared to conventional art.

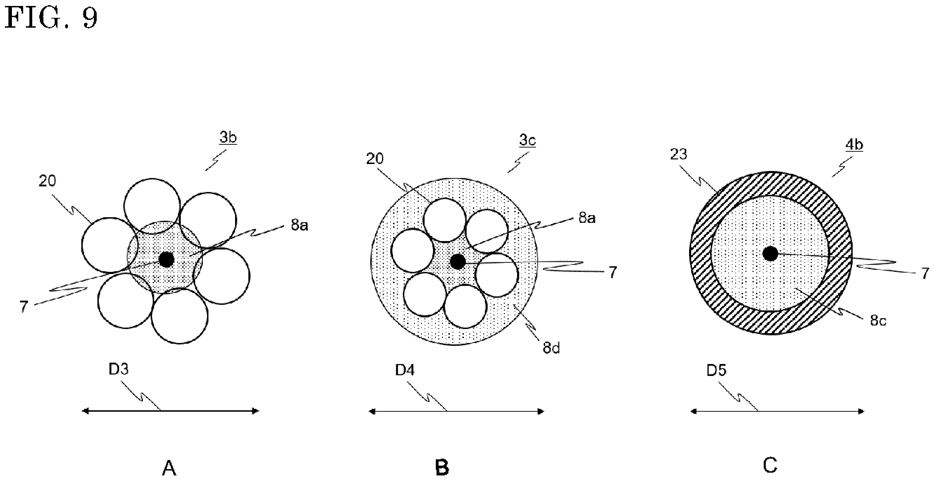

In addition, FIG. 9A and FIG. 9B show other examples used as the sensor rope 3. Both figures are schematic sectional views when cut along a plane perpendicular to the axis. For comparison to these, FIG. 9C shows a schematic sectional view of the sensor rope 4b.

First, the sensor rope 3b shown in FIG. 9A is composed of six steel wires including one more steel wire as compared to the sensor rope 3a, and the other configurations are the same as those of the sensor rope 3a. An outer-circumference diameter D3 of the sensor rope 3b is slightly greater than that of the sensor rope 3a but is an almost equal length of 1.2 to 8 mm.

Next, a sensor rope 3c (also called a jacket-type sensor rope) shown in FIG. 9B is configured in the same manner as the sensor rope 3b except that the outer side of the sensor rope 3c is coated with an insulator 8d such as rubber. In addition, an outer diameter D4 of the sensor rope 3c is slightly greater than that of the sensor rope 3b but is an almost equal length of 1.2 to 8 mm. As with these sensor ropes, an outer diameter D5 of the sensor rope 4b is also 1.2 to 8 mm.

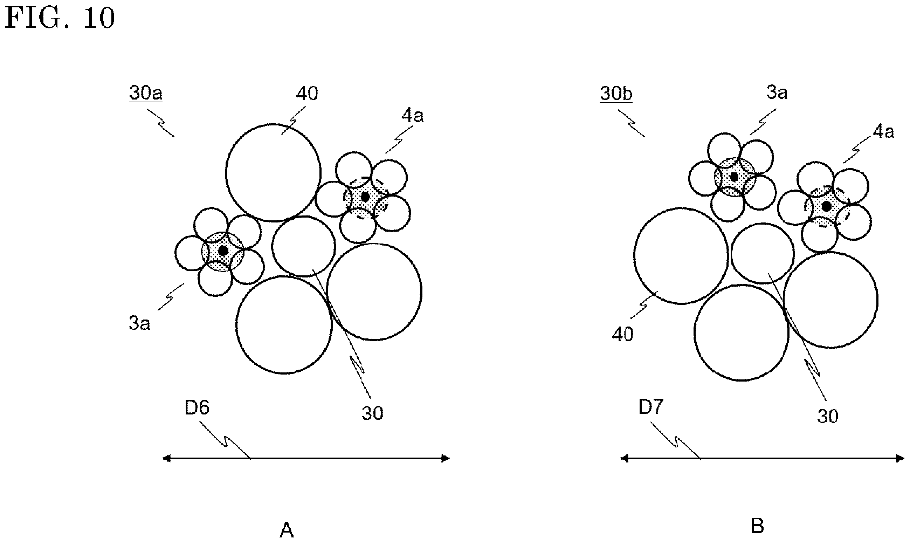

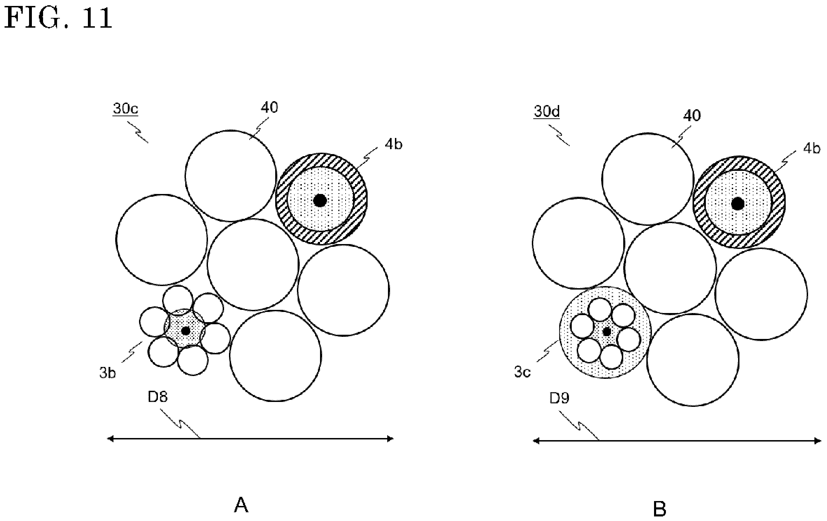

Next, as a measurement module for power cable monitoring (hereinafter, abbreviated as power monitoring module), a case where each of the various types of sensor ropes 3 or sensor ropes 4 described above is used as a combined structure with a strand cable added thereto in terms of configuration will be described in detail, using specific examples, with reference to FIG. 10A, FIG. 10B, FIG. 11A, and FIG. 11B.

As the measurement module for power cable monitoring, each of the various types of sensor ropes 3 or sensor ropes 4 described above may be used alone or in combination of the sensor rope 3 and the sensor rope 4, without adding a strand cable.

Example 1

FIG. 10A shows a schematic sectional view of the above power monitoring module 30a in Example 1. In the power monitoring module 30a in Example 1, a steel wire 30 is provided at a center part. An outer circumferential part is formed of five ropes wound helically, three of these ropes are ropes formed by third strand wires 40, and the other two are measurement fiber sensor ropes. Here, the measurement fiber sensor ropes, i.e., the sensor rope 3a and the sensor rope 4a, are located separately from each other. An outer-circumference diameter D6 of the power monitoring module 30a in Example 1 is 6 to 8 mm. The sensor rope 4a may be replaced with the sensor rope 4b.

Example 2

FIG. 10B shows a schematic sectional view of the above power monitoring module 30b in Example 2. The power monitoring module 30b in Example 2 is mostly the same as the above power monitoring module 30a in Example 1, and therefore, here, a part different from Example 1 will be described and the description of the same part as in Example 1 is simplified.

Example 2 is different from Example 1 in that the sensor rope 3a and the sensor rope 4a which are two measurement fiber sensor ropes among the five helically wound ropes forming the outer circumferential part are located adjacently to each other. An outer-circumference diameter D7 of the power monitoring module 30b in Example 2 is 6 to 8 mm as in Example 1. The sensor rope 4a may be replaced with the sensor rope 4b.

Example 3

FIG. 11A shows a schematic sectional view of the above power monitoring module 30c in Example 3. In the power monitoring module 30c in Example 3, an outer circumferential part is formed of six ropes wound helically, four of these ropes are ropes formed by the third strand wires 40, and the other two are the sensor rope 3b and the sensor rope 4b which are measurement fiber sensor ropes. As shown in FIG. 11A, a feature is that the sensor ropes 3b and 4b are located separately from each other at axis-symmetric positions of the power monitoring module 30c. An outer-circumference diameter D8 of the power monitoring module 30c in Example 3 is 6 to 8 mm as in Examples 1 and 2.

Example 4

FIG. 11B shows a schematic sectional view of the above power monitoring module 30d in Example 4. In the power monitoring module 30d (may be referred to as jacket type module 30d; hereinafter, the same applies) in Example 4, an outer circumferential part is formed of six ropes wound helically, two of these ropes are measurement fiber sensor ropes, and these measurement fiber sensor ropes are located separately from each other at axis-symmetric positions of the power monitoring module 30d, as in Example 3. However, the sensor rope 3c is used instead of the sensor rope 3b, unlike Example 3. An outer-circumference diameter D9 of the power monitoring module 30d in Example 4 is 6 to 8 mm as in Examples 1 to 3.

Accordingly, next, as a representative example of the power cable, regarding the power monitoring module 30b in Example 2 in which the sensor rope 4a (margin-length-provided Kira wire) and the sensor rope 3a are both mounted, among the above power monitoring modules, the fact that temperature and strain at a predetermined position are obtained at the same time will be described in detail.

As described above, at the outer circumferential part of the power monitoring module 30b, two measurement fiber sensor ropes are located adjacently to each other, one of these is the sensor rope 3a which is a margin-length-absent type, and the other is the sensor rope 4a which is a margin-length-provided type.

By using signals detected by the above two types of measurement fiber sensors, it becomes unnecessary to consider strain for one direction (one dimension) among three-dimensional components of strain in the measurement target cable detected by the power monitoring module 30b which is a measurement target, and therefore, in order to measure strain caused by deformation occurring in the power cable or the like, it is only necessary to use the following three Expressions (1) to (3) which are evaluation expressions for a frequency shift of Rayleigh frequency.

[Mathematical 1]

$$\Delta v_{R1} = C_{21}\Delta\varepsilon_1 + C_{22}\Delta T \quad (1)$$

[Mathematical 2]

$$\Delta v_{R2} = C_{22}\Delta T \quad (2)$$

[Mathematical 3]

$$\Delta v_{R3} = C_{21}\Delta\varepsilon_3 + C_{22}\Delta T \quad (3)$$

In the above Expressions (1) to (3), C21 and C22 are coefficients unique to an optical fiber and determined with respect to strain and temperature.

By solving the above three Expressions (1) to (3) simultaneously, temperature and strain at a measurement position to be obtained can be obtained at the same time. Here, temperature $T_{sea}$ obtained by a temperature sensor provided at a seabed is defined as reference temperature $T_{ref}$, and then the following Expression (4) is satisfied.

Thus, temperature T to be obtained can be calculated by the following Expression (5) based on the relation expression of Rayleigh frequency shift shown by the above Expression (2), using the reference temperature $T_{ref}$.

[Mathematical 4]

$$\mathrm{T}_{ref} = T_{sea} \quad (4)$$

[Mathematical 5]

$$T = T_{ref} + \Delta v_{R2} / C_{22} \quad (5)$$

Embodiment 2

In Embodiment 1, it has been described that, in the intelligent power cable used in the power cable monitoring system, the measurement fiber sensors (sensor ropes) are mounted at only the outer circumferential part of the intelligent power cable.

An intelligent power cable 100a (hereinafter, may be simply referred to as power cable 100a) of Embodiment 2 is greatly different from Embodiment 1 in that measurement fiber sensors used in the power cable which is a measurement target are mounted at not only the outer circumferential part but also the center axis part interposed among the power transmission cables 1 (hereinafter, may be simply referred to as CV cables) represented by a plurality of CV cables.

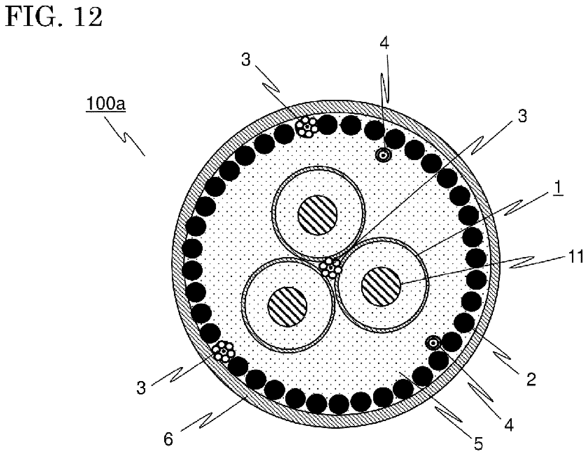

The intelligent power cable 100a of Embodiment 2 will be described below with reference to FIG. 12. Also in the case of the above mounting, the same effects as in Embodiment 1 can be obtained, and further, measurement accuracy for strain or temperature with respect to a measurement target can be increased.

FIG. 12 is a schematic sectional view showing an example of the intelligent power cable of Embodiment 2.

As shown in FIG. 12, in the intelligent power cable of Embodiment 2, the three-core power transmission cable 1 is provided at the center axis part, and the sensor rope 3 is provided so as to be interposed in the three-core power transmission cable 1, and this is the greatest difference from the intelligent power cable of Embodiment 1.

As shown in FIG. 12, the sensor rope 4 is provided at the outer circumferential part but is located in an outer circumferential layer different from the layer where the plurality of armoring wires 2 are arranged, i.e., in a layer that is slightly inward of the layer where the plurality of armoring wires 2 are arranged, unlike Embodiment 1. Thus, as compared to the intelligent power cable of the above Embodiment 1, in the intelligent power cable of Embodiment 2, accuracy of temperature measurement in the insulation layer is higher, thus having an advantage in evaluating maximum operation power.

In the intelligent power cable of Embodiment 2, the sensor rope is provided at the center axis part, whereby information such as temperature characteristics of the CV cables can be measured more accurately. Thus, change in the CV cables over time can be grasped more accurately, and this is advantageous as a CV cable monitoring cable. In this case, if the sensor rope 4a is used, the outer-circumference diameter thereof is small and accordingly, the temperature characteristics of the CV cables can be measured at a position closer to the CV cables, whereby it becomes possible to perform more accurate measurement by the intelligent power cable.

As described above, in the intelligent power cable 100a of Embodiment 2, measurement for strain and temperature (in particular, measurement for temperature) of the power cable which is a measurement target can be performed more accurately, whereby a monitoring power cable with higher reliability can be realized.

In a case where current is applied to the power transmission cables 1 in the intelligent power cable of Embodiment 1 or Embodiment 2 described above, the function of the power cable can be monitored by monitoring temperature change during current application. In addition, the above strain measurement module can detect humidity and therefore can also monitor immersion of the power cable. This will be described below with reference to a graph of temperature change during current application.

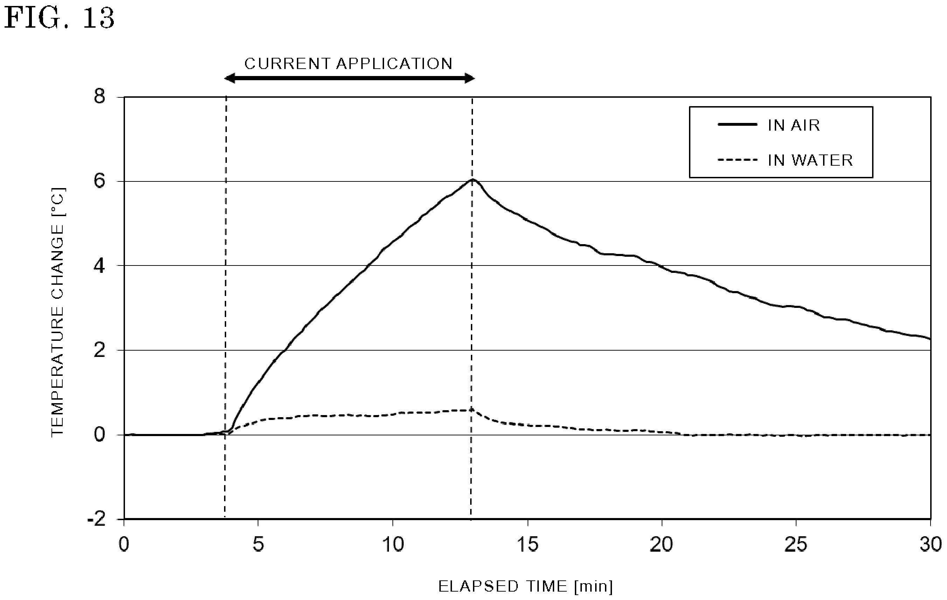

First, regarding temperature change during current application, FIG. 13 shows data in air and in water in a comparison manner. As shown in FIG. 13, current application is started at the time when about 4 minutes have passed since the start of a test, and current application is finished at the time when about 10 minutes have passed.

From FIG. 13, it is found that, over elapse of time, difference between temperature changes in air and in water is clearly detected, and temperature change is greater in air than in water. The measurement for temperature change in the cable during current application is performed for, as described below, achieving a purpose of monitoring the cable function such as checking damage of the installed cable (e.g., determining whether or not dielectric breakdown has occurred in the cable, using temperature increase characteristics) or checking whether or not immersion of the cable has occurred, using characteristics of temperature changes in air and in water during current application.

Next, a result of measuring distribution of temperature over a distance of several km using the intelligent power cable will be described. The reason why measurement over such a long distance is needed is that, normally, in a case of installing the intelligent power cable, the cable wound around a winder having an outer diameter of not less than several m is unwound from the outermost winding position of the winder at the installation site, to be installed at a predetermined installation position, and therefore it is necessary to inspect damage of the cable inside the winder.

That is, whether or not insulation layer breakdown has occurred in the power cable is determined, and if insulation layer breakdown has occurred, the above temperature distribution measurement is performed for specifying the breakdown location. The reason is as follows.

Near the position where insulation layer breakdown has occurred, a power wire and a cable structure steel wire are in contact with each other, and at this place, the electric resistance is small and thus large current arises. When large current has arisen, the power cable is heated at the place where large current has arisen, so that the temperature increases at the place. Accordingly, whether or not dielectric breakdown has occurred can be determined. Such temperature change is observed at not only the place where the temperature change has directly occurred but also at an adjacent layer position.

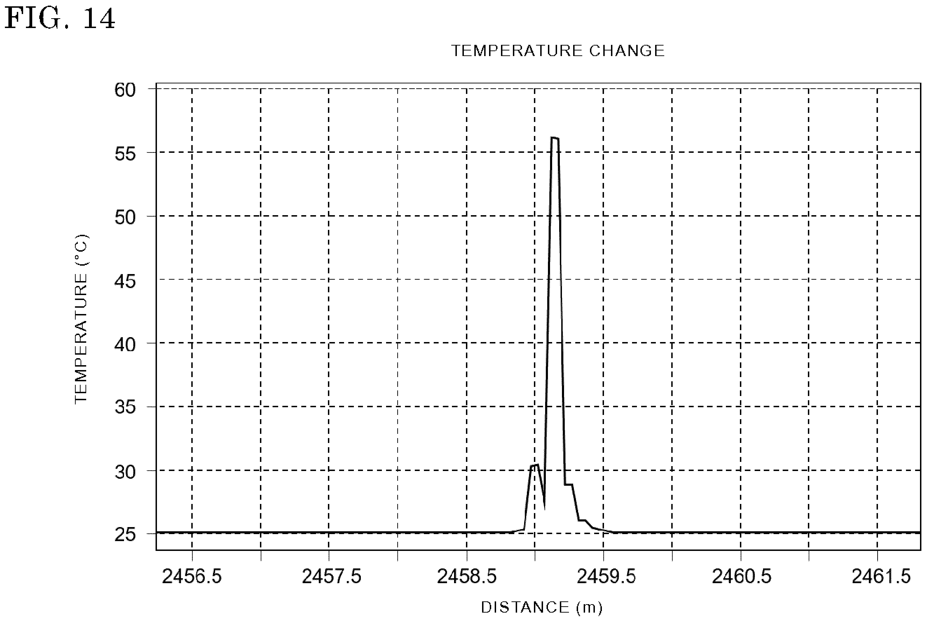

FIG. 14 shows an example of actual measurement of temperature change due to insulation leakage at one location at a distance of several km. From FIG. 14, it is found that a measurement result of temperature by the armored optical module at different winding positions in the radial direction of the cable indicates the maximum temperature change near a distance (position) of 2459 m where insulation leakage occurred.

Here, the reference temperature of the cable was 25 °C. It is noted that a more reliable measurement result can be obtained by matching the winding pitch (length) of the cable and a measurement result of a plurality of different measurement layers at the same distance (position), and the matching was also performed through actual measurement.

In addition, it is possible to monitor the shape of the cable by using the above intelligent power cable. In the following description, it will be shown that, by monitoring torsion and extension of the cable at the same time, bending of the cable can be monitored, and on the basis of this, the deformed shape of the cable can be monitored.

That is, if axial strain and torsion of the SK wire can be measured in a distributed manner, direction vectors of deformation of the entire cable can be acquired, and the deformation shape such as bending of the cable is obtained by integrating the direction vectors. On the basis of such information, strain in deformation of the cable can be obtained, whereby it becomes possible to monitor the cable shape and also it becomes possible to predict the life of the cable by using the Basquin's law or the like (see Non-Patent Document 3).

The feature of the above power cable is that, as an example, not only the power cable is long (in the axial direction) but also, normally, the cable radius is large and the weight is large. Therefore, in a case of monitoring such a cable shape, it is necessary to evaluate deformation and the like while taking the cable at least as a three-dimensional cylindrical body instead of taking the cable as a "line", and without such evaluation, deformation cannot be grasped accurately.

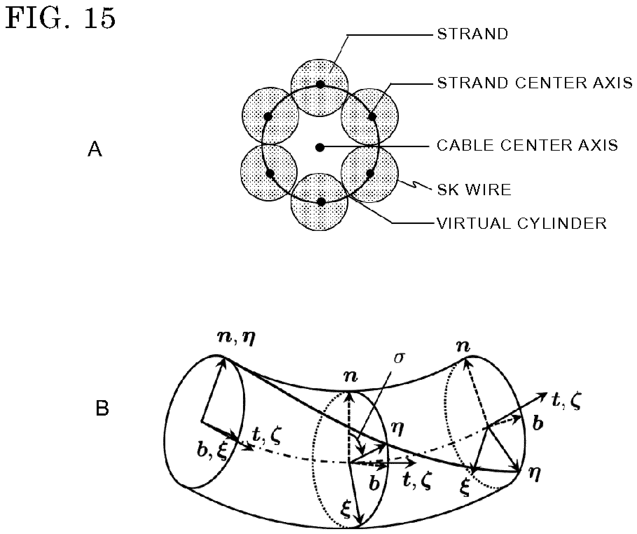

In actuality, as shown in FIG. 15A, the cable is formed in a strand form (having a plurality of cables), and therefore, first, description will be started from a stage where a plurality of cables are approximately regarded as a (single) cylindrical body.

Accordingly, next, with reference to FIG. 15A and FIG. 15B, a three-dimensional evaluation method for the cable as described above will be described below (see Non-Patent Document 3).

FIG. 15A shows a method for generating an evaluation model of shape change of the cable. In this evaluation model, a wire-element bundle (corresponding to the above plurality of cables) of an electric wire is assumed as one dense elastic body. In the actual cable, a plurality of (six) SK steel wires are helically twisted with each other to form a strand.

First, under the assumption that the center axis of each wire-element bundle is helically wound around a cylindrical surface having a constant radius, a model is generated. That is, as shown in FIG. 15A, a virtual cylinder connecting the center axes of the six strands is assumed and deformation of the virtual cylinder is evaluated first.

Then, for the virtual cylinder, coordinate systems are set as shown in FIG. 15B. As the coordinate systems, sets of three unit vectors orthogonal to each other about the center axis curve of a line-shaped object, i.e., a $(t, n, b)$ coordinate system (Frenet frame) and a $(\zeta, \eta, \xi)$ coordinate system, are defined. The three vector components of each coordinate system represent a tangent vector, a principal normal vector, and a binormal vector.

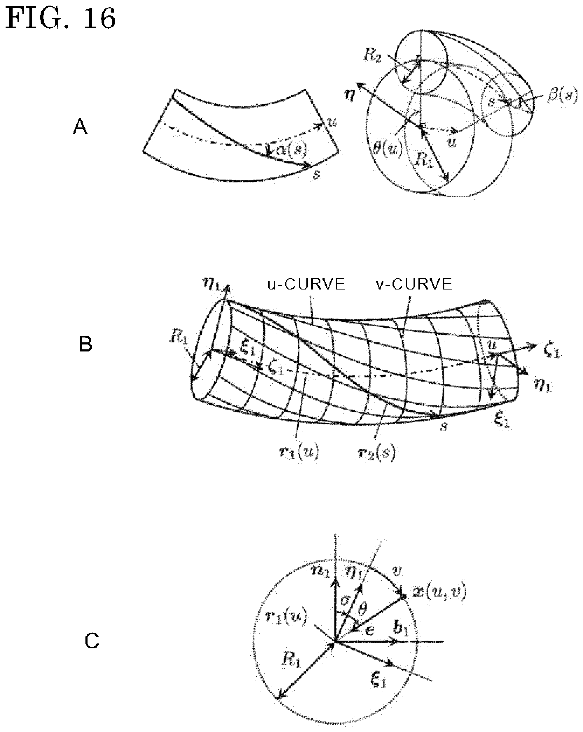

Next, FIG. 16A, FIG. 16B, and FIG. 16C show an evaluation model in a case where torsion and bending have occurred in the above virtual cylinder. First, the shape of the wire-element bundle having the center axis on the virtual cylinder can be determined by $\alpha$ and $\beta$ shown in FIG. 16A.

Here, $\alpha$ is an angle (pitch angle) between the virtual cylinder center axis and the wire-element bundle center axis, and $\beta$ is a torsion angle of the wire-element bundle with respect to a virtual cylinder normal. When $\alpha$ and $\beta$ are determined, the shape of the cable is determined.

Next, the virtual cylinder surface will be discussed with reference to FIG. 16B. Using a local coordinate system $(u, v)$, coordinates $x(u, v)$ on the virtual cylinder surface are represented. Then, a vertical cross-section of an electric wire passing a point $r_1(u)$ on the virtual cylinder axis is assumed (FIG. 16C). Here, $R_1$ and $R_2$ denote the radius of the virtual cylinder and the radius of the wire-element bundle. In addition, $u$ and $v$ are parameters expressing the virtual cylinder surface (a coordinate axis $u$ represents a neutral axis of deformation, and an axis (axis in a curve coordinate system) orthogonal thereto is a coordinate axis $v$).

On the basis of FIG. 15A, FIG. 15B, FIG. 16A, FIG. 16B, and FIG. 16C, axial strain and torsion of the SK wire are measured in a distributed manner, whereby deformation direction vectors for deformation of the entire cable can be acquired. Then, by integrating these vectors, the shape of the bending can be derived.

As described above, the reason why three or more SK wires are needed in principle in this monitoring system is that it is necessary to measure axial strain and torsion of the SK wires in a distributed manner, i.e., measure deformation of the SK wires in a distributed manner three-dimensionally (using three independent parameters).

Thus, considering the above modeling method, it is found that deformation of the cable can be appropriately measured by this intelligent monitoring system.

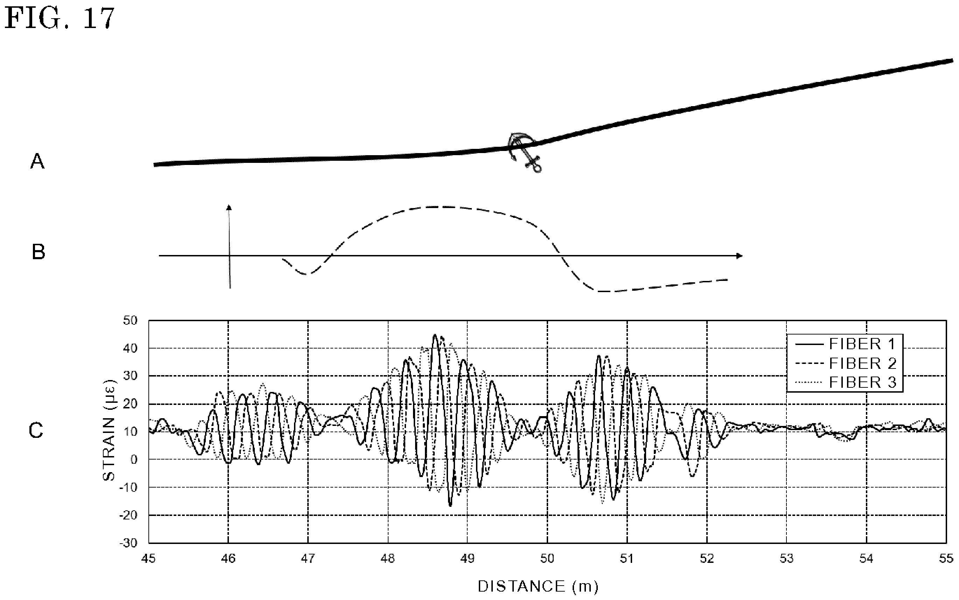

Next, using the above method, deformation of the cable in a case where the cable is drawn by an anchor will be discussed with this intelligent monitoring system. In this discussion case, an example in which strain caused by bending of the cable is measured will be described below with reference to FIG. 17A, FIG. 17B, and FIG. 17C.

FIG. 17A is an image diagram schematically showing deformation of a cable caused when an anchor is caught on the cable. FIG. 17B below FIG. 17A is a graph showing the deformation state of the cable shown in FIG. 17A, with the cable distance set on the horizontal axis and cable deflection or strain set on the vertical axis.

FIG. 17C shows strains that have occurred in three measurement fibers (the measurement fibers are all located in the outer layer of the cable) corresponding to deformations of the three-core power transmission cable in this case, with respect to the distance. FIG. 17C shows strain waveforms corresponding to bending deformations caused when deformation of 1 mm in the up-down direction is imparted to a cable having three optical fibers wound at a pitch of 40 cm.

As shown in FIG. 17C, it is found that deformation (strain) has occurred in units of the smallest winding pitch of the armoring wire. From this graph, detailed information such as a start point of deformation or displacement between the wires can be obtained. Further, from this graph, it is found that the influence of deformation is considerably reduced at a distance close to 53 m.

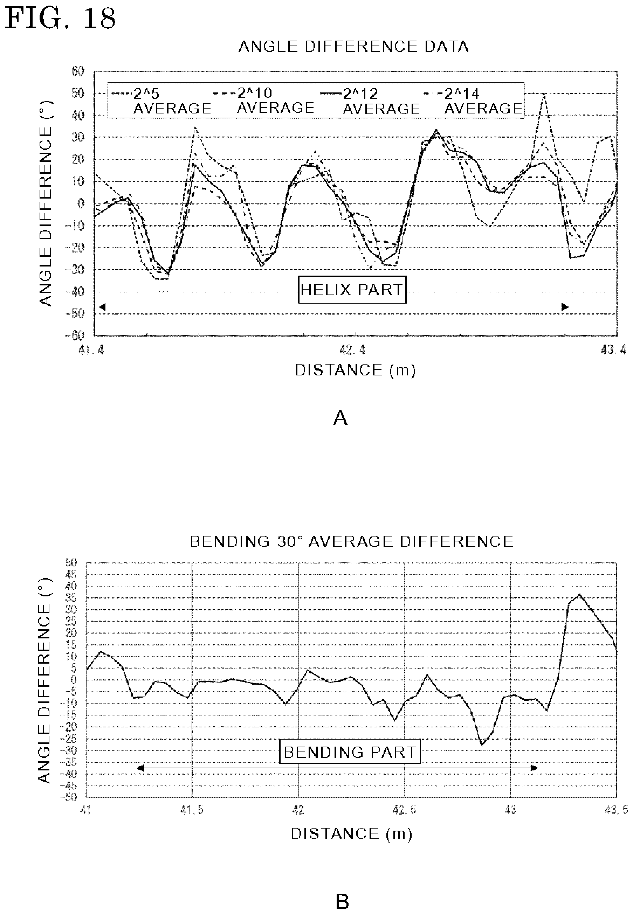

In order to confirm accuracy of the above bending measurement, bending measurement was performed using a polarization signal of a Rayleigh scattering signal. Specifically, from a difference between Rayleigh scattering signals generated from the SK wire after deformation (helically wound and subjected to plane bending) and the SK wire before deformation (not subjected to deformation yet), a torsion angle based on helical deformation was measured. The measurement results thereof are shown in FIG. 18A and FIG. 18B.

FIG. 18A shows measurement data of angle differences (angle differences of phase signals included in polarization signals) corresponding to the helix part (see arrow part in FIG. 18A), using the number of times of measurement as a parameter. In FIG. 18A, stable measurement results are obtained for four kinds of numbers of times ($2^5$ times, $2^{10}$ times, $2^{12}$ times, $2^{14}$ times), and averaged values for the respective numbers of times are shown. FIG. 18B shows measurement data of an average (angle) difference in 30° bending corresponding to a bending part (see arrow part in FIG. 18B). From FIG. 18A and FIG. 18B, it is found that the actual torsion angle and bending of the cable wound helically can be measured.

The sampling interval in the measurement is 5 cm, and this value is sufficiently smaller than the armoring pitch 1.5 m of the armoring wire 2 and thus is considered to be sufficiently applicable to deformation measurement for the armoring wire 2.

An application example of this technology relevant to the above feature will be schematically described below.

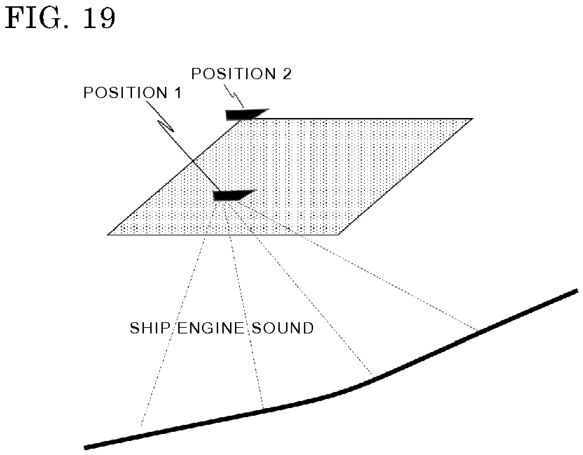

FIG. 19 shows the outline of a method for specifying a sailing position of a ship where there is a possibility that a cable will be damaged. Here, a sailing position of a ship as a target is specified through measurement for distribution of sound waves (e.g., sound waves due to an engine sound of the ship which is the measurement target) using DAS which is suitable for high-speed RIP measurement.

At this time, as shown in FIG. 19, a ship is detected through measurement at multiple points at the same time, and thus is specified. Specifically, it is assumed that a ship A sailing at a position 1 (e.g., a position at 10.33 km in the westward direction and 1.22 km in the northward direction from a reference position, on the basis of a sound wave signal), and a ship B sailing at a position 2 (e.g., a position at 15.56 km in the westward direction and 4.27 km in the northward direction from the reference position, on the basis of a sound wave signal) are detected. In this case, the ship A at the position 1 which is closer to the reference position is specified. Thus, it becomes possible to notify the specified ship A about measurement information, to alert the ship A.

Although the invention is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the invention.

It is therefore understood that numerous modifications which have not been exemplified can be devised without departing from the scope of the present invention. For example, at least one of the constituent components may be modified, added, or eliminated. At least one of the constituent components mentioned in at least one of the preferred embodiments may be selected and combined with the constituent components mentioned in another preferred embodiment.

DESCRIPTION OF THE REFERENCE CHARACTERS

    1 power transmission cable
    2 armoring wire (first strand wire)
    3, 3a, 3b, 3c, 4 sensor rope
    4a sensor rope (margin-length-provided Kira wire)
    4b sensor rope (constant-interval fixation-point-provided FIMT)
    5 insulation layer
    6 shield portion
    7 optical fiber
    8a, 8b resin
    8c, 8d insulator
    11 conductor
    20 second strand wire

21 non-joined part
22 joined part
23 FIMT
30 steel wire
30a, 30b, 30c, 30d power monitoring module
40 third strand wire
50 resin injection device
60 optical fiber feeding device
61 bobbin
62a, 62b, 62c, 62d pulley
100, 100a intelligent power cable (power cable)
101 submarine cable
102 floating cable
103 buried cable
110 backscattering light measurement device
200 power cable monitoring system

**Claims**

1. A power cable monitoring system comprising:

   a power cable including a power transmission cable provided at an inner circumferential part, an armoring wire provided at an outer circumferential part, and an armored optical module at the same diameter as the armoring wire, the armored optical module having an optical fiber to detect a physical quantity of a measurement target; and a backscattering light measurement device which measures distribution of the physical quantity of the measurement target, using backscattering light from the optical fiber, wherein distribution of temperature and strain of the power cable is obtained from a frequency shift signal of Rayleigh backscattering light obtained by the backscattering light measurement device on the basis of a signal detected by the armored optical module, and a polarization distribution signal obtained from the Rayleigh backscattering light.

2. The power cable monitoring system according to claim 1, wherein

   the armoring wire is formed by a first strand wire, and
   the armored optical module includes a first sensor rope having a second strand wire helically covering the optical fiber and joined to the optical fiber via resin over an entire length in an axial direction, and a second sensor rope which has a second strand wire helically covering the optical fiber and joined to the optical fiber via resin intermittently in an axial direction, or which has a constant-interval fixation-point-provided FIMT having therein the optical fiber joined via resin intermittently in an axial direction.

3. A power cable monitoring system comprising:

   a power cable including a power transmission cable provided at an inner circumferential part, an armoring wire provided at an outer circumferential part, and an armored optical module having an optical fiber to detect a physical quantity of a measurement target; and a backscattering light measurement device which measures distribution of the physical quantity of the measurement target, using backscattering light from the optical fiber, wherein distribution of temperature and strain of the power cable is obtained from frequency shift signals of Rayleigh backscattering light and Brillouin backscattering light obtained by the backscattering light measurement device on the basis of a signal detected by the armored optical module.

4. The power cable monitoring system according to claim 3, wherein

   the armoring wire is formed by a first strand wire, and
   the armored optical module includes a first sensor rope having a second strand wire helically covering the optical fiber and joined to the optical fiber via resin over an entire length in an axial direction.

5. The power cable monitoring system according to claim 2, wherein

the power cable has a plurality of the power transmission cables and further includes the second sensor rope provided so as to be interposed among the plurality of power transmission cables.

6. The power cable monitoring system according to claim 2 or 4, wherein
   the first sensor rope has the second strand wires whose number is five or six.

7. The power cable monitoring system according to any one of claims 2, 4, 5, and 6, wherein
   the first sensor rope is coated with an insulator on an outer side.

8. The power cable monitoring system according to claim 2 or 5, wherein
   the first sensor rope and the second sensor rope are located separately from each other.

9. The power cable monitoring system according to claim 2 or 5, wherein
   the first sensor rope and the second sensor rope are located adjacently to each other.

10. The power cable monitoring system according to any one of claims 1, 2, and 5, wherein
    the Rayleigh backscattering light obtained by the backscattering light measurement device is high-speed Rayleigh scattering light for which a detection frequency is not less than 2000 times/s.

11. The power cable monitoring system according to any one of claims 1, 2, and 5, wherein
    a signal of distribution of a torsion angle of the power cable is obtained from the polarization distribution signal.

12. A method for manufacturing the second sensor rope of the power cable included in the power cable monitoring system according to claim 2 or 5,
    the method being performed using:

    an optical fiber feeding device including a bobbin around which the optical fiber is wound, and a pulley which rotates along with rotation of the bobbin and moves the optical fiber in contact with an outer circumference of the pulley, thus feeding the optical fiber to outside; and
    a resin injection device which injects resin for joining the optical fiber and the second strand wire, at a position where the optical fiber and the second strand wire start to be wound with each other, wherein
    a speed in a feeding direction at which the optical fiber is fed is set to be greater than a movement speed in an axial direction when the optical fiber and the second strand wire are wound with each other, and
    injection of the resin from the resin injection device at the position is performed intermittently.

# FIG. 1

# FIG. 2

| ITEMS | MEASUREMENT METHODS | | |
| --- | --- | --- | --- |
| | USING DTS | SEPARATION BY CABLE | R&B HYBRID |
| OUTLINE | DTS USING Raman SCATTERING FOR TEMPERATURE MEASUREMENT, WHILE USING Brillouin SCATTERING FOR STRAIN MEASUREMENT | TWO KINDS OF SM FIBERS DIFFERENT IN SENSITIVITIES FOR TEMPERATURE AND STRAIN ARE MOUNTED TO ONE CABLE | FREQUENCY SHIFTS OF BOTH Rayleigh (R) AND Brillouin (B) ARE ACTUALLY MEASURED WITH RESPECT TO SINGLE SM FIBER |
| MEASUREMENT DISTANCE | NOT GREATER THAN 10 km | NOT LESS THAN 50 km | NOT LESS THAN 10 km |
| TEMPERATURE ACCURACY | ALLEGEDLY 0.1°C | NOT GREATER THAN 0.1°C (USING Rayleigh SCATTERING) | AIMING AT ABOUT 0.3°C |
| SPATIAL RESOLUTION | 25 cm AT MAXIMUM, NORMALLY, NOT LESS THAN 100 cm | NOT GREATER THAN 10 cm | ALREADY COMMERCIALLY AVAILABLE WITH MAXIMUM OF 2 cm |
| MAIN PROBLEM | INFLUENCE OF LOSS IN OPTICAL FIBER IS COMPLICATED. CORRECTION METHOD IS NEEDED. | SPECIAL-STRUCTURE OPTICAL FIBER NEEDS TO BE PROVIDED | VERIFIED ON SITE. TEMPERATURE ACCURACY IS SUBJECT TO ACCURACY OF Brillouin MEASUREMENT |

EP 4 471 383 A1

# FIG. 3

MEASUREMENT METHODS

| Raman SCATTERING | RIP (Rayleigh SCATTERING) | POLARIZATION DISTRIBUTION (MEASURE TORSION ANGLE FROM Rayleigh SCATTERING) | HIGH-SPEED RIP | Brillouin SCATTERING |

HYBRID

HYBRID

TEMPERATURE — RESOLUTION > 100 cm, DISTANCE < 10 km

HIGH ACCURACY

RESOLUTION < 10 cm, DISTANCE < 10 km

TEMPERATURE + STRAIN

TEMPERATURE + STRAIN + DEFORMATION OF SLIP-TYPE DEFORMATION — RESOLUTION < 10 cm, DISTANCE > 50 km

SOUND WAVE DISTRIBUTION — RESOLUTION < 100 cm, DISTANCE > 50 km

MEASUREMENT FO MODULE

| FIMT | CONSTANT-INTERVAL COATED FIMT | MARGIN-LENGTH-PROVIDED Kira WIRE | SK WIRE |

THREE OR MORE

TEMPERATURE — MODULE 1

TEMPERATURE + STRAIN

TEMPERATURE + STRAIN + DEFORMATION OF SLIP-TYPE DEFORMATION — MODULE 2 / MODULE 3 / MODULE 4 / MODULE 5

EASE OF MANUFACTURING — LOW — MIDDLE — HIGH

STRENGTH AND LIFE — LOW — MIDDLE — HIGH

# FIG. 4

|  | STRUCTURE | FEATURE |
|---|---|---|
| MODULE 3 | CONSTANT-INTERVAL FIXATION-POINT-PROVIDED FIMT + SK WIRE | HIGH-QUALITY TEMPERATURE INFORMATION + STRAIN INFORMATION |
| MODULE 4 | MARGIN-LENGTH-PROVIDED Kira WIRE + SK WIRE | NEW HIGH-QUALITY TEMPERATURE INFORMATION + STRAIN INFORMATION |
| MODULE 5 | SK WIRE | STRAIN AND TEMPERATURE ARE SENSED AT THE SAME TIME AND THEN SEPARATED BY MEASUREMENT DEVICE |

# FIG. 5

FIG. 6

A

B

EP 4 471 383 A1

# FIG. 7

EP 4 471 383 A1

FIG. 8

FIG. 9

A              B              C

EP 4 471 383 A1

FIG. 10

A

B

EP 4 471 383 A1

FIG. 11

A

B

FIG. 12

FIG. 13

EP 4 471 383 A1

FIG. 14

TEMPERATURE CHANGE

EP 4 471 383 A1

FIG. 15

A

STRAND

STRAND CENTER AXIS

CABLE CENTER AXIS

SK WIRE

VIRTUAL CYLINDER

B

# FIG. 16

A

B

C

FIG. 17

EP 4 471 383 A1

# FIG. 18

### ANGLE DIFFERENCE DATA

A

### BENDING 30° AVERAGE DIFFERENCE

B

FIG. 19

POSITION 2

POSITION 1

SHIP ENGINE SOUND

<table>
<tr><td colspan="2" align="center">**INTERNATIONAL SEARCH REPORT**</td><td colspan="2">International application No.<br>**PCT/JP2022/002854**</td></tr>
</table>

| A. | CLASSIFICATION OF SUBJECT MATTER |
|---|---|

***G01D 5/353***(2006.01)i
FI:   G01D5/353 B

According to International Patent Classification (IPC) or to both national classification and IPC

| B. | FIELDS SEARCHED |
|---|---|

Minimum documentation searched (classification system followed by classification symbols)

G01D5/353, G01K11/32-11/324, G01B11/16, H01B11/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020/027223 A1 (FURUKAWA ELECTRIC CO LTD) 06 February 2020 (2020-02-06) paragraphs [0035]-[0044], [0071]-[0085], fig. 1, 2, 9 | 3 |
| A | | 1-2, 4-12 |
| Y | JP 2015-145592 A (RES INST INNOVATIVE TECH EARTH) 13 August 2015 (2015-08-13) paragraphs [0012]-[0035], fig. 3-5 | 3 |
| A | | 1-2, 4-12 |
| A | JP 3-68825 A (FUJIKURA LTD) 25 March 1991 (1991-03-25) | 1-12 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/002854**

| Patent document<br>cited in search report | Publication date<br>(day/month/year) | Patent family member(s) | Publication date<br>(day/month/year) |
|---|---|---|---|
| WO 2020/027223 A1 | 06 February 2020 | US 2021/0116265 A1<br>paragraphs [0023]-[0032],<br>[0062]-[0078], fig. 1, 2, 9<br>EP 3832254 A1<br>CN 112513567 A | |
| JP 2015-145592 A | 13 August 2015 | (Family: none) | |
| JP 3-68825 A | 25 March 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56117427 U
- JP 11066978 A

- JP 2019179593 A

**Non-patent literature cited in the description**

- **K. KISHIDA et al.** Study of Optical Fibers Strain-Temperature Sensitivities Using Hybrid Brillouin-Rayleigh System. *Photonic Sensors*
- **MORIYASU et al.** Bending and Torsional Deformation Analysis of a Twisted Wire. *Journal of the Robotics Society of Japan*, 2012, vol. 30 (8), 813-821

- **B. MATVICHUK et al.** Full length Distributed temperature monitoring of export cables and interconnectors beyond 150 km. *Omnisens SA*, 2018
- **NISHIMOTO et al.** New Type of 66kV XLPE Submarine Cable with Mechanical-Damage-Detectable-Sensor by Optical Fiber. *IEEJ Transactions on Power and Energy*, 1992, vol. 112 (10), 921-926